# EUROPEAN PATENT APPLICATION

(11) **EP 4 596 925 A1**
(43) Date of publication of application: **06.08.2025**
(21) Application number: 23870688.1
(22) Date of filing: 25.09.2023
(51) Int. Cl.: F16K 1/02, F16K 1/32, F16K 31/06

(54) **ELECTRIC VALVE**

(30) Priority: 29.09.2022 CN 202211203795
(71) Applicant: ZHEJIANG SANHUA AUTOMOTIVE COMPONENTS CO., LTD., Hangzhou, Zhejiang 310018 (CN)
(72) Inventor: PAN, Yiyuan, Hangzhou, Zhejiang 310018 (CN); CHEN, Rongbin, Hangzhou, Zhejiang 310018 (CN)
(74) Representative: Maikowski & Ninnemann Patentanwälte Partnerschaft mbB
(86) International application number: PCT/CN2023/120997
(87) International publication number: WO 2024/067457

(57) **Abstract**

An electric valve, comprising a nut assembly (5), a valve seat assembly (4), and a sleeve (6). The nut assembly comprises a plastic part (51) and a connecting portion (52); the connecting portion is fixed to the plastic part; the material of the connecting portion is a metal material; the sleeve is fixedly connected to the connecting portion; the connecting portion comprises a lower end face portion (522); the valve seat assembly comprises a first end portion (47); the material of the first end portion is a metal material; the first end portion is fixed to the lower end face portion by means of welding. According to the electric valve, the sleeve is fixedly connected to the connecting portion, and the first end portion of the valve seat assembly is fixed to the lower end face portion by means of welding, so that the valve seat assembly works in conjunction with the connecting portion without machining an additional mating structure, thereby reducing the machining costs of the electric valve.

## Description

The present application claims the priority to Chinese Patent Application No. 202211203795.7, titled "ELECTRIC VALVE", filed on September 29, 2022 with the China National Intellectual Property Administration, which is incorporated herein by reference in its entirety.

### FIELD

The present application relates to the technical field of fluid control, and in particular to an electric valve.

### BACKGROUND

An electric valve includes a nut assembly, a valve seat assembly and a sleeve. The nut assembly is provided with a connecting plate, and the nut assembly is fixedly connected to the valve seat assembly through the connecting plate. The sleeve is fixedly connected to the valve seat assembly. It is necessary to form cooperating structures respectively for the connecting plate and the sleeve on the valve seat assembly by machining, which is not conducive to reducing the manufacturing cost of the electric valve.

### SUMMARY

An object of the present application is to provide an electric valve, which is beneficial to reducing the manufacturing cost of the electric valve.

In order to achieve the above object, the following technical solution is provided according to an embodiment of the present application.

An electric valve includes a nut assembly, a valve seat assembly, and a sleeve. The nut assembly includes a plastic part and a connecting portion. The connecting portion is fixed to the plastic part, and the connecting portion is made of a metallic material. The sleeve is fixedly connected to the connecting portion.

The connecting portion includes a lower end face portion, and the valve seat assembly includes a first end portion. The first end portion is made of a metallic material, and the first end portion is fixed to the lower end face portion by welding.

In the embodiment of the present application, the electric valve includes the nut assembly, the valve seat assembly, and the sleeve. The nut assembly includes the plastic part and the connecting portion. The connecting portion is fixed to the plastic part, and the connecting portion is made of the metallic material. The sleeve is fixedly connected to the connecting portion. The connecting portion includes the lower end face portion, and the valve seat assembly includes the first end portion. The first end portion is made of the metallic material, and the first end portion is fixed to the lower end face portion by welding. With this arrangement that the sleeve is fixedly connected to the connecting portion and the first end portion of the valve seat assembly is fixed to the lower end face portion by welding, there is no need to manufacturing additional cooperating structures on the valve seat assembly to cooperate with the connecting portion, thereby reducing the manufacturing cost of the electric valve.

### BRIEF DESCRIPTION OF THE DRAWINGS

FIG. 1 is a schematic front structural view of a first embodiment of an electric valve according to the present application;
FIG. 2 is a schematic sectional structural view of the electric valve in FIG. 1 taken along a line A-A;
FIG. 3 is a schematic perspective structural view of a valve component in FIG. 2 from a perspective;
FIG. 4 is a schematic front structural view of the valve component in FIG. 3;
FIG. 5 is a schematic sectional structural view of the valve component in FIG. 4 taken along a line B-B;
FIG. 6 is a schematic enlarged structural view of a part A in FIG. 5;
FIG. 7 is a schematic sectional structural view of a crimping portion of a valve seat assembly in FIG. 2 from a perspective after clinching;
FIG. 8 is a schematic sectional structural view of the crimping portion of the valve seat assembly in FIG. 2 from the perspective before clinching;
FIG. 9 is a schematic sectional structural view of a crimping portion of a first valve seat portion in FIG. 2 from a perspective before clinching;
FIG. 10 is a schematic sectional structural view of a second valve seat portion in FIG. 2 from a perspective;
FIG. 11 is a schematic front structural view of a nut assembly in FIG. 2;
FIG. 12 is a schematic sectional structural view of the nut assembly in FIG. 11 taken along a line C-C;
FIG. 13 is a schematic perspective structural view of a connecting portion in FIG. 12 from a perspective;
FIG. 14 is a schematic top structural view of the connecting portion in FIG. 13;
FIG. 15 is a schematic front structural view of a second embodiment of the electric valve according to the present application;
FIG. 16 is a schematic sectional structural view of the electric valve in FIG. 15 taken along a line D-D;
FIG. 17 is a schematic enlarged structural view of a part B in FIG. 16;
FIG. 18 is a schematic sectional structural view of a valve component in FIG. 16 from a perspective;
FIG. 19 is a schematic sectional structural view of a nut assembly in FIG. 16 from a perspective;
FIG. 20 is a schematic perspective structural view of a connecting portion in FIG. 19 from a perspective;
FIG. 21 is a schematic top structural view of the connecting portion in FIG. 20;
FIG. 22 is a schematic enlarged structural view of another embodiment of the part B in FIG. 16;
FIG. 23 is a schematic sectional structural view of a third embodiment of the electric valve according to the present application from a perspective;
FIG. 24 is a schematic enlarged structural view of a part C in FIG. 23;
FIG. 25 is a schematic sectional structural view of a sleeve in FIG. 23 from a perspective;
FIG. 26 is a schematic enlarged structural view of the part C in FIG. 23 according to a third embodiment of the electric valve;
FIG. 27 is a schematic front structural view of a fifth embodiment of the electric valve according to the present application;
FIG. 28 is a schematic sectional structural view of the electric valve in FIG. 27 taken along a line E-E;
FIG. 29 is a schematic front structural view of a valve component in FIG. 28;
FIG. 30 is a schematic sectional structural view of the valve component in FIG. 29 taken along a line F-F;
FIG. 31 is a schematic sectional structural view of a nut assembly in FIG. 28 from a perspective;
FIG. 32 is a schematic perspective structural view of a connecting portion in FIG. 31 from a perspective;
FIG. 33 is a schematic top structural view of the connecting portion in FIG. 32;
FIG. 34 is a schematic front structural view of a sixth embodiment of the electric valve according to the present application;
FIG. 35 is a schematic sectional structural view of the electric valve in FIG. 34 taken along a line G-G;
FIG. 36 is a schematic sectional structural view of the electric valve in FIG. 34 taken along a line H-H;
FIG. 37 is a schematic view showing a combined structure of a valve component and a connecting assembly in FIG. 34;
FIG. 38 is a schematic perspective structural view of the valve component in FIG. 34 from a perspective;
FIG. 39 is a schematic front structural view of a seventh embodiment of the electric valve according to the present application;
FIG. 40 is a schematic sectional structural view of the electric valve in FIG. 39 taken along a line I-I;
FIG. 41 is a schematic sectional structural view of a valve component in FIG. 40 from a perspective;
FIG. 42 is a schematic perspective structural view of a nut assembly in FIG. 41.
FIG. 43 is a schematic front structural view of the nut assembly in FIG. 41;
FIG. 44 is a schematic perspective structural view of a connecting portion in FIG. 43 from a perspective;
FIG. 45 is a schematic top structural view of the connecting portion in FIG. 43; and
FIG. 46 is a schematic sectional structural view of a valve component of the electric valve according to a variation of the sixth embodiment of the present application from a perspective.

### DETAILED DESCRIPTION OF THE EMBODIMENTS

The present application is further illustrated hereinafter in conjunction with drawings and specific embodiments.

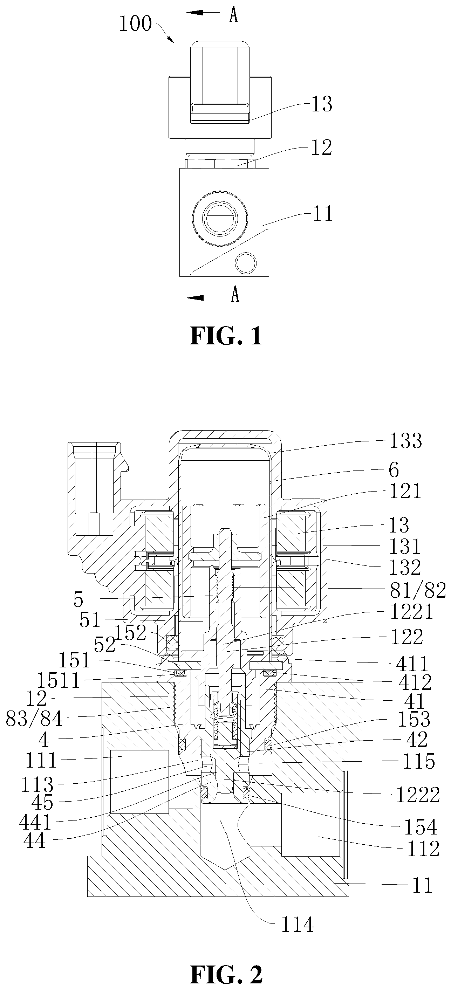

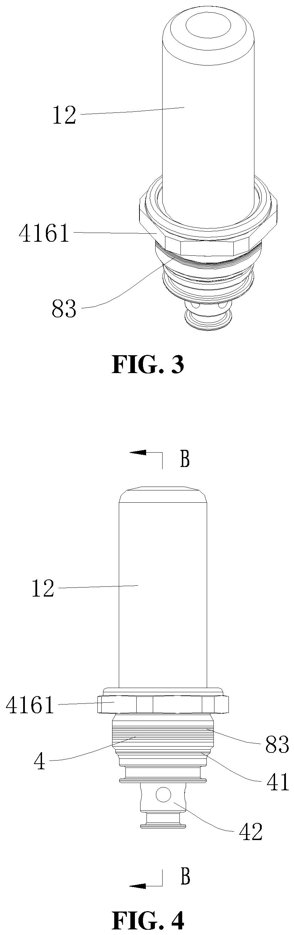

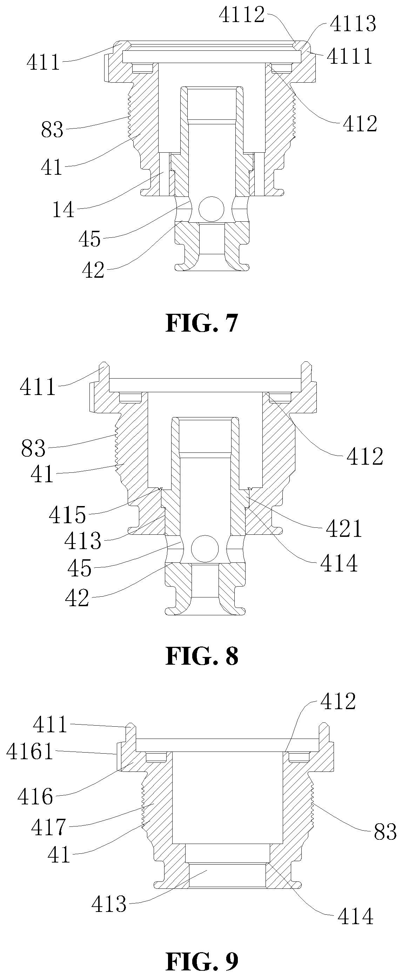

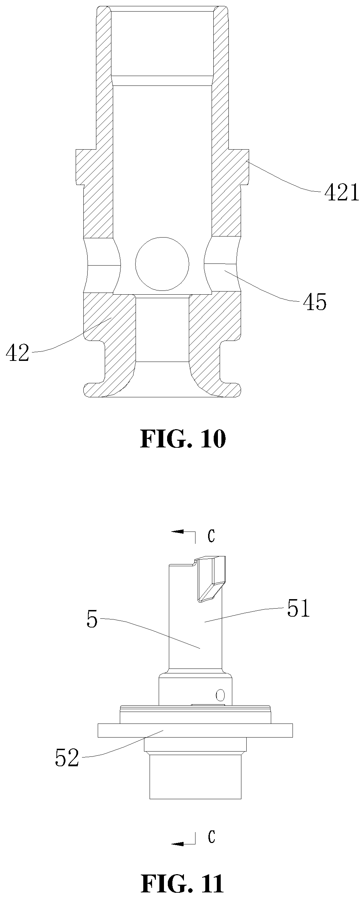

With reference to FIGS. 1 to 14, a first embodiment of an electric valve is schematically illustrated. In the present application, the electric valve 100 includes an electronic expansion valve, which may be applied to a refrigerant system, such as a commercial or vehicle thermal management system, or other systems that need thermal management, such as a thermal management system for a battery, a thermal management system for an electrical device, and the like.

With reference to FIGS. 1 to 2, the electric valve 100 includes a valve body 11, a valve component 12 and a coil assembly 13. In this embodiment, the valve component 12 is fixedly connected to the valve body 11, and the coil assembly 13 is fixedly connected to the valve body 11. The valve body 11 has a valve body cavity 115, and at least a part of the valve component 12 is located in the valve body cavity 115. Alternatively, in other embodiments, the coil assembly 13 may be fixedly connected to the valve component 12, and then the coil assembly 13 and the valve component 12, after being assembled, are fixedly connected to the valve body 11. In this embodiment, the valve body 11 is a separate valve block. In other embodiments, the valve body 11 may be a part of the system, such as a part of a heat exchanger or a flow channel plate. The coil assembly 13 includes a stator assembly 131 and an injection-molded body 132. The injection-molded body 132 covers at least a part of the stator assembly 131 by injection molding. The coil assembly 13 has a chamber 133 in which at least a part of the valve component 12 is located. The valve component 12 includes a valve seat assembly 4, a nut assembly 5, a sleeve 6, a rotor assembly 121 and a valve core assembly 122. At least a part of the sleeve 6 is located in the chamber 133. The stator assembly 131 is located on an outer side of the sleeve 6, and the rotor assembly 121 is located on an inner side of the sleeve 6. The valve core assembly 122 is connected to the rotor assembly 121. An exciting magnetic field may be generated by applying a predetermined current to the stator assembly 131, so as to drive the rotor assembly 121 to rotate. The rotor assembly 121 drives the valve core assembly 122 to rotate, and the valve core assembly 122 is in threaded fit with the nut assembly 5 to convert a rotation of the rotor assembly 121 into an axial movement of the valve core assembly 122 relative to the valve seat assembly 4. In this embodiment, the valve core assembly 122 includes a screw portion 1221 and a valve core portion 1222. The screw portion 1221 and the valve core portion 1222 are separate structures that are connected to each other, the connection manner of which includes a fixed manner, a limited manner, and a driving manner. An external thread 81 is formed on the screw portion 1221, and an internal thread 82 in cooperation with the external thread 81 is formed on the nut assembly 5. The screw portion 1221 is in threaded fit with the nut assembly 5, converting the rotation of the rotor assembly 121 into an axial movement of the screw portion 1221 relative to the nut assembly 5. Alternatively, in other embodiments, the screw portion 1221 and the valve core portion 1222 may be an integrated structure or may be integrally formed. The valve seat assembly 4 has a valve port portion 44 that is provided with a valve port 441, and the valve core assembly 122 is axially movable relative to the valve port 441. The valve core portion 1222 of the valve core assembly 122 cooperates with the valve port 441 to regulate a flow area of the valve port 441 or an opening degree of the valve port 441, thereby regulating a flow rate of a refrigerant. For the convenience of description, orientation terms, such as "above" and "below", are defined based on upward and downward directions in FIG. 1 of the specification, which merely represent relative positions rather than states of the product in actual use. For example, in FIG. 1, the coil assembly 13 is located above the valve body 11, which does not mean that the coil assembly 13 must be located above the valve body 11 in actual use, since the electric valve may be mounted horizontally or obliquely. If the electric valve is mounted horizontally, the coil assembly 13 is located on the left or right side of the valve body 11, and this case or similar cases are within the protection scope of the present application.

With reference to FIGS. 2 to 6 and FIGS. 10 to 13, in this embodiment, the nut assembly 5 includes a plastic part 51 and a connecting portion 52. The connecting portion 52 is fixed to the plastic part 51, the fixation manner of which includes injection molding, interference fit, adhesive bonding, or interference fit in conjunction with adhesive bonding. In this embodiment, the nut assembly 5 is formed by injection molding with the connecting portion 52 serving as an injection-molding insert, and the plastic part 51 covers a part of the connecting portion 52. For example, in this embodiment, the plastic part 51 covers an inner side part of the connecting portion 52. In this embodiment, the connecting portion 52 is made of a metallic material, and the sleeve 6 is made of a metallic material, such as stainless steel. The plastic part 51 may be specifically made of a specialty engineering plastic or a composite material with certain strength, such as mechanically reinforced polyetheretherketone (PEEK) material or modified polyetheretherketone (PEEK) material, or mechanically reinforced polyphenylene sulfide (PPS) material or modified polyphenylene sulfide (PPS) material. In this embodiment, the plastic part 51 is of an integrated structure and is integrally formed by injection molding. In other embodiments, the plastic part 51 may have separately formed structures that are fixedly or limitedly connected to each other to form the plastic part 51. In this embodiment, the connecting portion 52 has a fixation reinforcing portion 523 at a part where the connecting portion 52 is connected to the plastic part 51. The fixation reinforcing portion 523 is located at the inner side part of the connecting portion 52 and is at least partially covered by the plastic part 51. For example, an inner periphery of the connecting portion 52 is of a non-circular structure. For example, a shape of an inner side of a cross-section of an inner side wall of the connecting portion 52 may be square or hexagonal, or an irregular circle with a straight edge, a flower shape or the like. This arrangement enhances the connection strength between the connecting portion 52 and the plastic part 51, and can prevent the connecting portion 52 from rotating circumferentially relative to the plastic part 51 compared with an arrangement that the side wall of the connecting portion 52 is of a circular structure. In other embodiments, the inner periphery of the connecting portion 52 may be provided with a groove structure, a protrusion structure, a knurl structure, or other structures that may achieve similar functions. It is also possible to create a through hole, a groove, a protrusion or other structures in an axial direction. Or, a combination of the above structures may be provided.

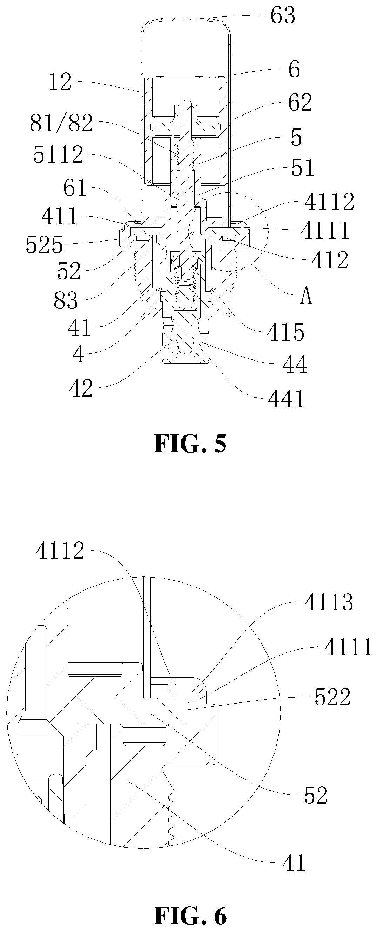

With reference to FIGS. 2 and 5, in this embodiment, the sleeve 6 is fixedly connected to the connecting portion 52. Specifically, in this embodiment, the sleeve 6 includes an opening portion 61, a sleeve main body 62 and a sleeve top portion 63. The opening portion 61 is closer to the connecting portion 52 than the sleeve top portion 63. The sleeve 6 has an opening at the opening portion 61, and the sleeve top portion 63 seals an upper end of the sleeve 6. The connecting portion 52 is made of stainless steel, and the sleeve 6 is made of stainless steel. The opening portion 61 of the sleeve 6 is fixed to the connecting portion 52 by welding, such as laser welding, brazing and the like. In this embodiment, the opening portion 61 of the sleeve 6 is fixed to the connecting portion 52 by laser welding.

With reference to FIGS. 2 to 9, the valve seat assembly 4 includes a first valve seat portion 41, which includes a crimping portion 411 and a support portion 412. A lower end portion of the connecting portion 52 abuts against the support portion 412, so that the support portion 412 limits the connecting portion 52 to restrict a lowest position of the connecting portion 52 relative to the first valve seat portion 41. The lower end portion of the connecting portion 52 abuts against the support portion 412 directly or indirectly. After a clinching portion is clinched, at least a part of the crimping portion 411 extends towards a central axis of the nut assembly 5, at least a part of the crimping portion 411 abuts against the connecting portion 52, and at least a part of the crimping portion 411 is located above the connecting portion 52. The crimping portion 411 limits the connecting portion 52, preventing the connecting portion 52 from moving away from the valve seat assembly 4 in an axial direction of the electric valve, and the connecting portion 52 is fixed to the first valve seat portion 41 by the crimping portion 411. This arrangement simplifies the connection between the nut assembly 5 and the valve seat assembly 4, and eliminates a welding step compared with an arrangement that the nut assembly 5 is welded to the valve seat assembly 4, thereby reducing production costs.

With reference to FIGS. 2 to 9, in this embodiment, the valve seat assembly 4 further includes a second valve seat portion 42, and the first valve seat portion 41 is fixedly or limitedly connected to the second valve seat portion 42. The first valve seat portion 41 is made of an aluminum material, which may reduce a weight of the valve seat assembly 4 to further reduce an overall weight of the electric valve, and may also facilitate the clinching and bending of the crimping portion 411 to reduce the clinching difficulty. In this embodiment, the crimping portion 411 is located at an upper end of the first valve seat portion 41. The crimping portion 411 includes a base portion 4111 and an end portion 4112. The end portion 4112 is located at an upper side of the base portion 4111 and is bent towards the central axis of the nut assembly 5 through clinching, and at least a part of the end portion 4112 is located above the connecting portion 52. Before clinching, the crimping portion 411 is pre-formed by machining or other methods, and the end portion 4112 is substantially coaxial with the base portion 4111. After clinching, the end portion 4112 is bent towards the central axis of the nut assembly 5. In this embodiment, the connecting portion 52 includes an outer edge 525, which is located at an outer periphery of the connecting portion 52. The end portion 4112 abuts against the outer edge 525 of the connecting portion 52, or abuts against an upper end face of the connecting portion 52 close to the outer edge 525, or abuts against both of them. This arrangement prevents the connecting portion 52 from being detached from the valve seat assembly 4 in the axial direction. In this case, an outer side edge of the connecting portion 52 is in clearance fit or abutting fit or interference fit with the base portion 4111, and the base portion 4111 can limit a radial position of the connecting portion 52.

In other embodiments, the base portion 4111 may abut against the outer edge 525 of the connecting portion 52 to limit an axial position of the connecting portion 52. In another embodiment, the crimping portion 411 further includes a transition portion 4113 located between the base portion 4111 and the end portion 4112. The transition portion 4113 abuts against the outer edge 525 of the connecting portion 52 to limit the axial position or radial position of the connecting portion 52. The end portion 4112 or the transition portion between the end portion 4112 and the base portion 4111 may abut against the outer side edge of the connecting portion 52 to limit the radial position of the connecting portion 52.

In other embodiments, the crimping portion 411 may alternatively be formed by compression. Specifically, the crimping portion 411 may be formed by compressing the first valve seat portion 41 by tooling. The connecting portion 52 is then fixed to the first valve seat portion 41 by the crimping portion 411.

With reference to FIGS. 2 to 12, in this embodiment, the plastic part 51 of the nut assembly 5 includes a main body portion 511 and a nut portion 512. An outer diameter of the main body portion 511 is substantially larger than an outer diameter of the nut portion 512, and the main body portion 511 is arranged closer to the valve seat assembly 4 than the nut portion 512. The connecting portion 52 is connected to the main body portion 511 by injection molding. The nut portion 512 has a first through hole 5121 and the internal thread 82 which is located on a wall of the first through hole 5121. The screw portion 1221 passes through the first through hole 5121, and a part of the screw portion 1221 passing out of the first through hole 5121 is connected to the rotor assembly 121 by a method including welding. An outer circumferential wall of the screw portion 1221 has the external thread 81 in cooperation with the internal thread 82, and the screw portion 1221 is in threaded fit with the nut portion 512. In this embodiment, the nut portion 512 has a guide section 5112, which is located on a lower side of the internal thread 82. The screw portion 1221 has a part in cooperation with the guide section 5112, and the guide section 5112 can guide the screw portion 1221. In other embodiments, the guide section may be arranged on an upper side of the internal thread 82.

With reference to FIGS. 2 to 10, in this embodiment, the valve seat assembly 4 further includes the second valve seat portion 42, which is substantially of a hollow cylindrical shape. At least a part of the valve core assembly 122 is located in an inner chamber of the second valve seat portion 42. The second valve seat portion 42 has the valve port portion 44 that is provided with the valve port 441, and the valve core assembly 122 is axially movable relative to the valve port 441. The valve core portion 1222 of the valve core assembly 122 cooperates with the valve port 441 to regulate the flow area of the valve port 441, thereby regulating the flow rate of the refrigerant. The second valve seat portion 42 further has a side hole 45 located between the valve port portion 44 and the first valve seat portion 41. The first valve seat portion 41 has a mounting hole 413, and at least a part of the second valve seat portion 42 is located in the mounting hole 413. In this embodiment, the second valve seat portion 42 passes through the first valve seat portion 41, and the first valve seat portion 41 is connected to the second valve seat portion 42, the connection manner of which includes a fixed manner and a limit manner.

In this embodiment, the valve body 11 includes a first flow passage 111, a second flow passage 112, a first cavity 113 and a second cavity 114. The first flow passage 111 is in communication with the first cavity 113, the second flow passage 112 is in communication with the second cavity 114, and the first cavity 113 is in communication with the second cavity 114 through the valve port 441. In this embodiment, the chamber of the second valve seat portion 42 is in communication with the first cavity 113 through the side hole 45.

With reference to FIGS. 2 to 10, in this embodiment, an outer circumferential wall of the second valve seat portion 42 is in interference fit with an inner circumferential wall of the mounting hole 413. The first valve seat portion 41 has a step portion 414, which is located in the mounting hole 413, and the second valve seat portion 42 has a flange portion 421. A lower end face of the flange portion 421 abuts against a bottom surface of the step portion 414, restricting a lowest position of the second valve seat portion 42 relative to the first valve seat portion 41. The first valve seat portion 41 includes a limiting structure 415 which abuts against the flange portion 421, and at least a part of the limiting structure 415 is located above the flange portion 421. The limiting structure 415 prevents the first valve seat portion 41 from departing from the second valve seat portion 42 in a direction away from the second valve seat portion 42. In this embodiment, the limiting structure 415 is formed through compression. The second valve seat portion 42 is compressed by tooling to form the limiting structure 415. The limiting structure 415 extends towards the central axis of the electric valve, and the second valve seat portion 42 is fixed to the first valve seat portion 41 by the limiting structure 415. This arrangement facilitates the connection between the first valve seat portion 41 and the second valve seat portion 42, so as to eliminate the welding step. In other embodiments, the limiting structure 415 may be pre-formed, and after clinching, a part of the limiting structure 415 extends towards the central axis of the electric valve. In yet another embodiment, the first valve seat portion 41 may be fixed to the second valve seat portion 42 only by interference fit, or by interference fit in conjunction with adhesive fixation, or by welding or threaded connection.

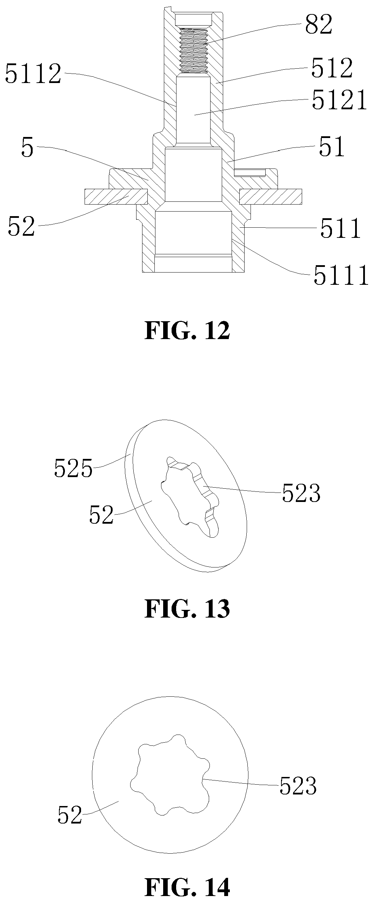

With reference to FIGS. 5 and 12, in this embodiment, the main body portion 511 of the nut assembly 5 has a guide portion 5111 in cooperation with the second valve seat portion 42, and the second valve seat portion 42 is substantially hollow and cylindrical in shape. An outer circumferential portion of the second valve seat portion 42 abuts against the main body portion 511 or is in clearance fit with the main body portion 511, which is beneficial to improving the coaxiality of the second valve seat portion 42 and the valve core assembly 122.

With reference to FIGS. 2 to 8, in this embodiment, the first valve seat portion 41 has a balance hole 14, which passes through the first valve seat portion 41 along the axial direction of the electric valve. The number of the balance hole 14 may be determined according to needs. In this embodiment, the number of the balance hole 14 is two. The arrangement of the balance holes 14 is beneficial to balancing pressures of cavities corresponding to both ends of the balance holes 14, thereby reducing the valve opening force. In this embodiment, the first valve seat portion 41 is made of an aluminum material, which, compared with being made of materials such as stainless steel, helps to reduce the processing difficulty of the balance holes 14.

With reference to FIGS. 2 to 9, in this embodiment, the valve body 11 of the electric valve has the valve body cavity 115. At least a part of the valve seat assembly 4 is located in the valve body cavity 115, and the first cavity 113 is a part of the valve body cavity 115. The first valve seat portion 41 has an external thread portion 83, and an inner peripheral wall of the valve body cavity 115 has an internal thread portion 84 in cooperation with the external thread portion 83. The valve seat assembly 4 is fixed to the valve body 11 by threaded fit.

With reference to FIGS. 2 to 9, in this embodiment, the first valve seat portion 41 includes a first portion 416 and a second portion 417. The first portion 416 is located above the second portion 417, and the first portion 416 is closer to the coil assembly 13 than the second portion 417. The first portion 416 includes the aforementioned support portion 412 and the crimping portion 411, and the second portion 417 has the aforementioned external thread portion 83, which is arranged at an outer periphery the second portion 417. The first portion 416 further has a cooperating edge 4161. The cooperating edge 4161 is located at an outer periphery of the first portion 416, and is used as a force application point in cooperation with an external tightening tool. For example, the cooperating edge 4161 may be of a hexagonal or quadrilateral structure. By using the external tightening tool, such as a hex wrench, in cooperation with the cooperating edge 4161, the valve seat assembly 4 can be screwed tightly onto the valve body 11. A lower end face of the first portion 416 abuts against the valve body 11, limiting a lowest position of the valve seat assembly 4 relative to the valve body.

With reference to FIGS. 2 to 6, the electric valve further includes a first seal 151, which is located between the connecting portion 52 and the first valve seat portion 41. The first seal 151 is tightly pressed between the connecting portion 52 and the first valve seat portion 41, and abuts against the connecting portion 52 and the first valve seat portion 41. The first seal 151 is located between the support portion 412 and the connecting portion 52. The support portion 412 and/or the connecting portion 52 have a first groove 1511, and the first seal 151 is accommodated in the first groove 1511. By providing the first seal 151, a working medium can be prevented from leaking to an outside of the electric valve through a gap between the connecting portion 52 and the support portion 412. In this embodiment, the first groove 1511 is located in the valve body 11.

With reference to FIGS. 2 to 6, the electric valve further has a second seal 152, which is located between the injection-molded body 132 and the sleeve 6. An inner side and an outer side of the second seal 152 abut against the injection-molded body 132 and the sleeve 6 respectively, and the second seal 152 is pressed tightly between the injection-molded body 132 and the sleeve 6. The second seal 152 is provided to prevent external moisture or harmful substances from entering a gap between the sleeve 6 and the coil assembly 13 to cause corrosion of the coil assembly 13 or other components, thereby enhancing the lifespan and reliability of the electric valve. A lower end portion of the second seal 152 abuts against the crimping portion 411 or the connecting portion 52, or a support gasket is provided on a lower side of the second seal 152 for supporting the second seal 152.

With reference to FIGS. 2 to 6, in this embodiment, the electric valve further includes a third seal 153 and a fourth seal 154, which are located on both sides of the side hole 45 respectively. In this embodiment, the third seal 153 is located on a lower side or a lower side of the external thread portion 83, and the third seal 153 is tightly pressed between the second portion 417 of the first valve seat portion 41 and the valve body 11, preventing the working medium from leaking, to the outside of the electric valve, between the first valve seat portion 41 and the valve body 11. In other embodiments, the third seal 153 may be arranged between the first portion 416 and the valve body 11. The fourth seal 154 is tightly pressed between the valve port portion 44 of the second valve seat portion 42 and the valve body 11 to prevent the working medium in the first cavity 113 and the second cavity 114 from flowing through a gap between the valve port portion 44 and the valve body 11. In this embodiment, the valve seat assembly 4 further has grooves for accommodating the third seal 153 and the fourth seal 154. Alternatively, in other embodiments, the valve body 11 may be provided with grooves for accommodating the third seal and the fourth seal, or both the valve body 11 and the valve seat assembly 4 may be provided with a part of the grooves for accommodating the third seal and the fourth seal.

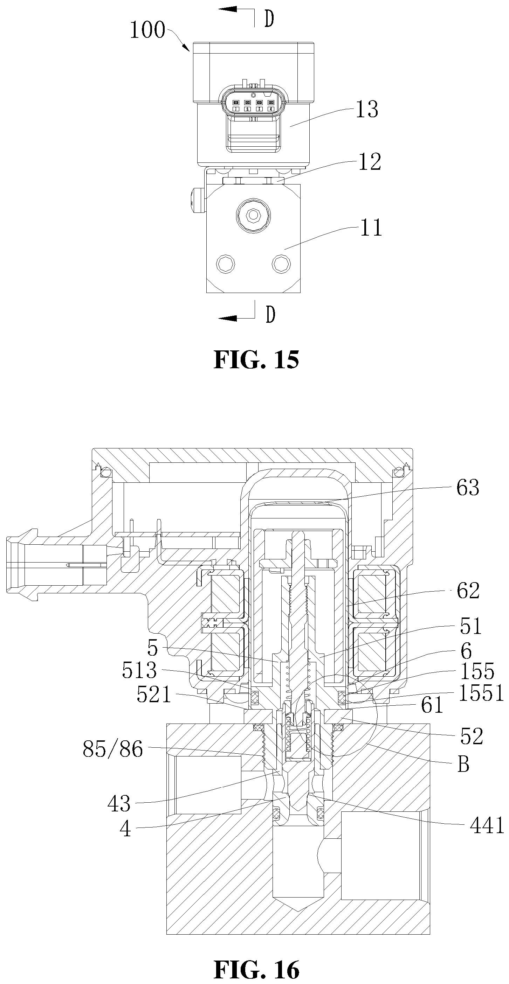

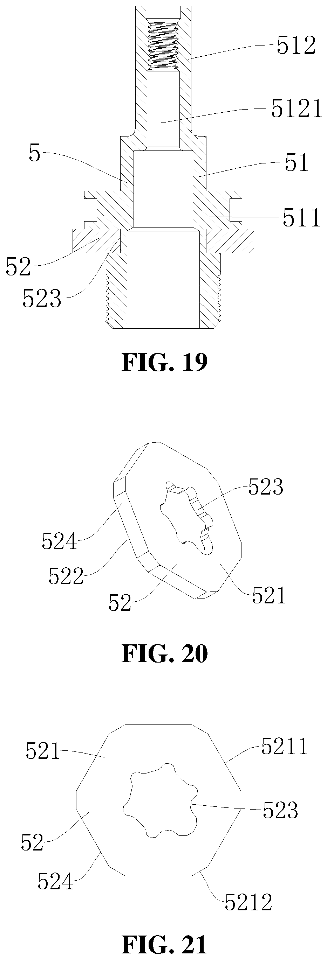

With reference to FIGS. 15 to 21, a second embodiment of the electric valve is schematically illustrated. In this embodiment, the electric valve 100 includes a nut assembly 5, a valve seat portion 43 and a sleeve 6. The nut assembly 5 includes a plastic part 51 and a connecting portion 52. The connecting portion 52 is fixed to the plastic part 51, the fixation manner of which includes injection molding, interference fit or adhesive bonding, or interference fit in conjunction with adhesive bonding. In this embodiment, the nut assembly 5 or a part of the nut assembly 5 is formed by injection molding with the connecting portion 52 serving as an injection-molding insert, and the plastic part 51 covers a part of the connecting portion 52. For example, in this embodiment, the plastic part 51 covers an inner side part of the connecting portion 52. In this embodiment, the connecting portion 52 is made of a metallic material, and the sleeve 6 is made of a metallic material, such as stainless steel. The plastic part 51 may be made of a specialty engineering plastic or a composite material with certain strength, such as mechanically reinforced polyetheretherketone (PEEK) material or modified polyetheretherketone (PEEK) material, or mechanically reinforced polyphenylene sulfide (PPS) material or modified polyphenylene sulfide (PPS) material. In this embodiment, the plastic part 51 is of an integrated structure and is integrally formed by injection molding. In other embodiments, the plastic part 51 may have separately formed structures that are fixedly or limitedly connected to each other to form the plastic part 51. In this embodiment, the connecting portion 52 has a fixation reinforcing portion 523 at a part where the connecting portion 52 is connected to the plastic part 51. The fixation reinforcing portion 523 is located at the inner side part of the connecting portion 52 and is at least partially covered by the plastic part 51. For example, an inner periphery of the connecting portion 52 is of a non-circular structure. For example, a shape of an inner side of a cross-section of an inner side wall of the connecting portion 52 may be square or hexagonal, or an irregular circle with a straight edge, a flower shape or the like. This arrangement enhances the connection strength between the connecting portion 52 and the plastic part 51, and can prevent the connecting portion 52 from rotating circumferentially relative to the plastic part 51 compared with an arrangement that the side wall of the connecting portion 52 is of a circular structure. In other embodiments, the inner periphery of the connecting portion 52 may be provided with a groove structure, a protrusion structure, a knurl structure, or other structures that may achieve similar functions. It is also possible to create a through-hole, a groove, a protrusion or other structures in an axial direction of the connecting portion 52. Or, a combination of the aforementioned structures may be provided.

With reference to FIGS. 15 to 21, in this embodiment, the sleeve 6 includes an opening portion 61, a sleeve main body 62 and a sleeve top portion 63. The opening portion 61 and the sleeve main body 62 form a one-piece structure. The opening portion 61 is located below the sleeve main body 62, and the sleeve top portion 63 is located above the sleeve main body 62 and seals a top end of the sleeve 6. The opening portion 61 is fixed to the connecting portion 52 by welding. The connecting portion 52 includes an upper end face portion 521. The opening portion 61 is fixed to the upper end face portion 521 by welding, and at least a part of the upper end face portion 521 is located on an outer side of the opening portion 61 along a radial direction of the electric valve. The upper end face portion 521 includes a flat surface. For example, the upper end face portion 521 is completely flat or mostly flat, and at least a part of the upper end face portion 521 connected to the sleeve 6 is flat. In the present application, a certain degree of roughness of the flat surface may be allowed. The upper end face portion 521 is located on an upper surface of the connecting portion 52, and the opening portion 61 abuts against the upper end face portion 521 and is fixed thereto by welding. In the radial direction of the electric valve, at least a part of the upper end face portion 521 lies on the outer side of the opening portion 61. In other words, there is a set distance between an outer edge of the opening portion 61 and at least a part of an outer edge of the upper end face portion 521. The sleeve 6 cooperates with the upper end face portion 521 of the connecting portion 52 in the above manner, which helps to simplify the welding structure of the electric valve. The upper surface of the connecting portion 52 may be a flat surface, and the entire upper end face portion 521 may be flat. This arrangement facilitates the processing of the connecting portion 52. For example, the connecting portion 52 may be formed by stamping, swaging or warm heading, which reduces or eliminates the machining steps of the connecting portion 52 and lowers the processing cost. Furthermore, compared with an arrangement that a step structure is provided and fitted with the opening portion 61 of the sleeve 6 before welding, the present arrangement reduces a height of the connecting portion 52, thereby reducing the overall height of the electric valve.

In this embodiment, the upper end face portion 521 is a flat surface. The distance between the outer edge of the opening portion 61 and the outer edge of the upper end face portion 521 is greater than or equal to 0.4 mm along the radial direction of the electric valve, and the opening portion 61 is fixed to the connecting portion 52 by laser welding. This arrangement allows better welding penetration, and improves the welding quality at the welding position. In order to achieve a better welding effect, the distance between the outer edge of the opening portion 61 and the outer edge of the upper end face portion 521 is greater than or equal to 0.5 mm. In this embodiment, the gap between the sleeve 6 and the connecting portion 52 is sealed by a welding surface.

In another embodiment, with reference to FIGS. 15 to 21, the upper end face portion 521 is a flat surface. The outer edge of the upper end face portion 521 includes a first edge 5211 and a second edge 5212, where an outer diameter of the second edge 5212 is larger than an outer diameter of the first edge 5211. In this embodiment, the first edge 5211 is located at a point where the outer edge of the upper end face portion 521 has the smallest outer diameter, while the second edge 5212 is located at a point where the outer edge of the upper end face portion 521 has the largest outer diameter. The outer edge of the opening portion 61 is within the first edge 5211, and the distance between at least a part of the outer edge of the opening portion 61 and the second edge 5212 is greater than or equal to 0.4 mm. The opening portion 61 is connected to the connecting portion 52 by laser welding. The outer edge of the connecting portion 52 may not be a regular circle, that is, the upper end face portion 521 may not be a regular circle. For example, it may be hexagonal or approximately hexagonal in shape. Or, restricted by the radial dimension of the connecting portion 52, it is allowed that a part of the outer edge of the opening portion 61 is flush or nearly flush with the outer edge of the connecting portion 52, but not beyond the outer edge of the connecting portion 52. Specifically, the outer edge of the opening portion 61 is within the first edge 5211, and the distance between at least a part of the outer edge of the opening portion 61 and the second edge 5212 is greater than or equal to 0.4 mm. For example, in subsequent embodiments, the connecting portion 52 has a cooperating portion 524 located at an outer periphery of the connecting portion 52. The cooperating portion 524 is approximately hexagonal in shape, i.e., the outer edge of the connecting portion 52 is roughly hexagonal in shape. In this case, it is allowed that a part of the outer edge of the opening portion 61 is flush or nearly flush with the outer edge of the connecting portion 52 at a point where the connecting portion 52 has the smallest diameter, but not beyond the outer edge of the connecting portion 52. In an embodiment having relatively good performance, the distance between the outer edge of the opening portion 61 and the first edge 5211 is greater than or equal to 0.4 mm.

With reference to FIGS. 15 to 21, in this embodiment, the sleeve 6 has an integrated structure, and the sleeve 6 is integrally processed and formed by stamping, drawing, and the like, which facilitates the manufacturing. A diameter of the sleeve main body 62 is constant, and diameters of the opening portion 61 and the sleeve main body 62 are equal to each other. The opening portion 61 is perpendicular to the upper end face portion 521. The perpendicular arrangement includes roughly perpendicular. The constant diameter and the equal diameters herein respectively refer to a constant inner diameter and equal inner diameters. The opening portion 61 includes a first lower end face 611, which abuts against the upper end face portion 521 and is connected to the upper end face portion 521 by laser welding. In this embodiment, an outer diameter of the opening portion 61 equals an outer diameter of the sleeve main body 62. This arrangement simplifies the processing of the sleeve 6.

With reference to FIGS. 15 to 21, in this embodiment, the plastic part 51 has a sleeve positioning portion 513, which is formed on a main body portion 511 of the plastic part 51. The sleeve 6 is arranged at an outer periphery of the sleeve positioning portion 513, and the sleeve positioning portion 513 abuts against an inner circumferential wall of the sleeve 6. The sleeve positioning portion 513 restricts a radial position of the sleeve 6 to limit a position of the sleeve 6 relative to the connecting portion 52, thereby improving the positioning precision of the sleeve 6 relative to the connecting portion 52. In this embodiment, the sleeve 6 is in interference fit with the sleeve positioning portion 513, which is beneficial to improving the positioning precision and further improving the coaxiality of the electric valve. Alternatively, in other embodiments, the sleeve 6 may be positioned by external tools.

In this embodiment, the plastic part 51 of the nut assembly 5 has a first external thread 85, which is located at an outer periphery of the plastic part 51 and at a lower side of the connecting portion 52. The electric valve further includes a valve body 11 which is provided with a valve body cavity 115. The valve body 11 has a first internal thread 86 in cooperation with the first external thread 85, and the first internal thread 86 is located on a wall of the valve body cavity 115. The nut assembly 5 is fixed to the valve body 11 by threaded fit. In this embodiment, a lower end face portion 522 of the connecting portion 52 abuts against the valve body 11, limiting a position of the connecting portion 52 relative to the valve body 11. Moreover, this arrangement is beneficial to reducing the risk of salt spray corrosion at the threaded joint.

Compared with the first embodiment of the electric valve, the electric valve in this embodiment includes the valve seat portion 43, and the valve port 441 is located at the valve seat portion 43. The valve seat portion 43 and the nut assembly 5 are connected by threaded fit or interference fit, or by threaded fit in conjunction with adhesive bonding, or by interference fit in conjunction with adhesive bonding. This arrangement is conducive to simplifying the structure of the electric valve with fewer relative parts.

The connecting portion 52 has the cooperating portion 524 located on an outer circumferential wall of the connecting portion 52 or on an upper end face of the connecting portion 52. The external tool can cooperate with the cooperating portion 524 to screw the connecting portion 52 to the valve body 11 to limit the positions thereof. The connecting portion 52 bears a force during threaded connection. For example, an external profile, that is, the outer circumferential wall of the connecting portion 52 may be suitable for bearing a force applied by assembly tools such as wrenches. An outer shape of a cross-section of the external profile may be square, hexagonal, or flower-shaped, or an irregular circle with parallel opposite sides for bearing the force, or the like. In this embodiment, the external profile of the connecting portion 52 is hexagonal in shape, and the outer edge of the opening portion 61 is within the smallest outer diameter of the connecting portion 52. The connecting portion 52 may alternatively be of other structures. For example, the upper end face of the connecting portion 52 is provided with a groove, and the external tooling is provided with a protrusion structure in cooperation with the groove structure, so as to achieve the threaded connection between the two components described hereinabove. A lower end face of the connecting portion 52 abuts against the valve body 11, restricting a lowest position of the connecting portion 52 relative to the valve body 11. A seal is provided between the connecting portion 52 and the valve body 11, or, a seal is provided between the plastic part 51 and the valve body 11.

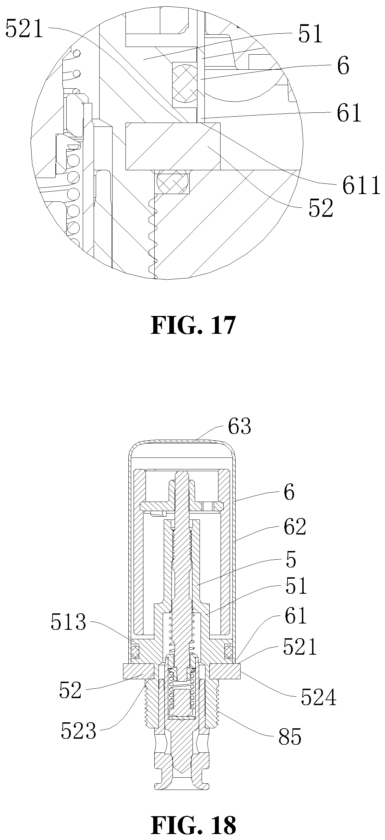

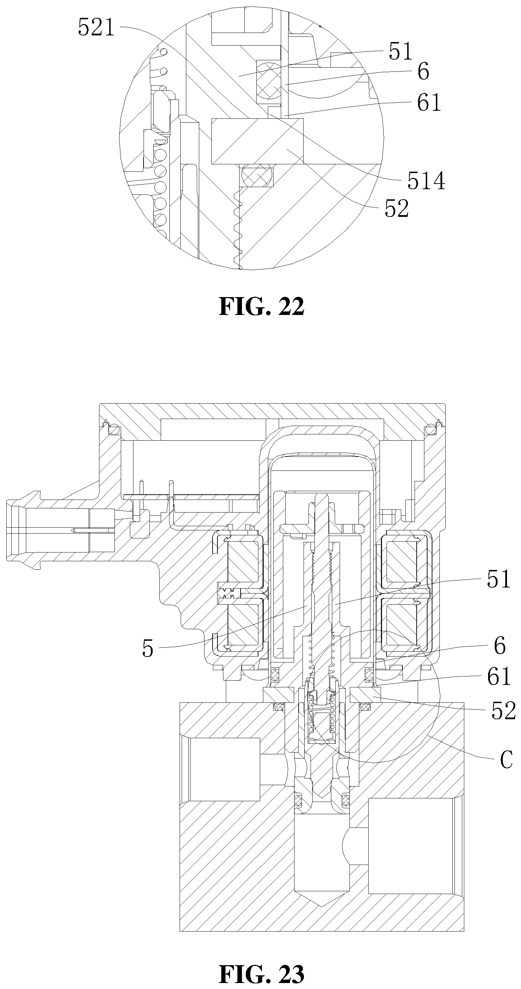

With reference to FIG. 22 in conjunction with FIGS. 16 and 17, in a variation of this embodiment, the plastic part 51 may be further provided with an avoidance portion 514, which is arranged facing the opening portion 61, and is not in contact with the opening portion 61. The avoidance portion 514 is recessed in a direction away from a part where the opening portion 61 is in cooperation with the connecting portion 52. When welding the opening portion 61 to the connecting portion 52, the avoidance portion 514 helps to reduce the heat transferred to the plastic part 51 during welding, thereby mitigating the thermal impact of welding on the injection-molded part.

The electric valve may further include a sealing member 155. The sleeve positioning portion 513 has a second groove 1551, and the sealing member 155 is located in the second groove 1551. The sealing member 155 is tightly pressed between the inner circumferential wall of the sleeve 6 and an inner side wall of the second groove 1551. With the sealing member 155, it is possible to prevent any adverse effects that may arise when the welded joint between the opening portion 61 of the sleeve 6 and the connecting portion 52 is not fully sealed.

A part of the structure of this embodiment may refer to the first embodiment described hereinabove.

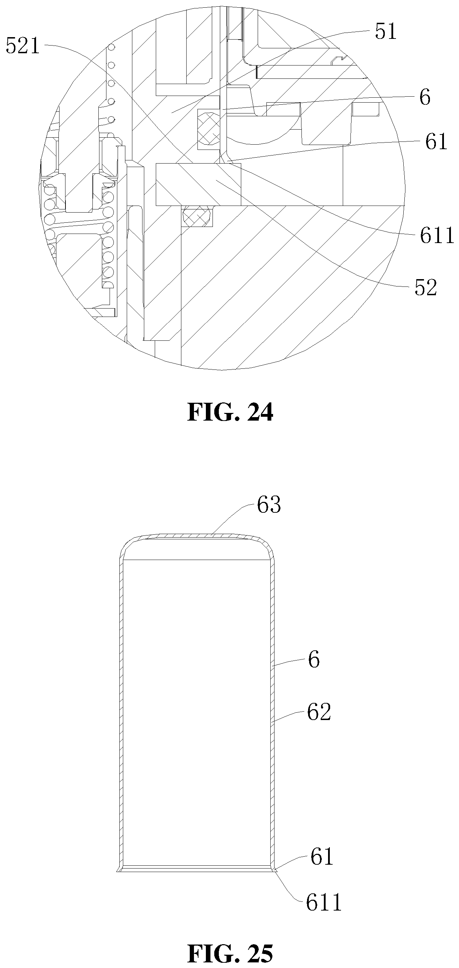

With reference to FIGS. 23 to 25, the third embodiment of the electric valve is schematically illustrated. Compared with the second embodiment of the electric valve, the sleeve 6 also includes the sleeve main body 62, and the opening portion 61 and the sleeve main body 62 form a one-piece structure. The opening portion 61 is located below the sleeve main body 62, and the sleeve main body 62 has a constant diameter. A minimum outer diameter of the opening portion 61 is equal to an outer diameter of the sleeve main body 62. In the axial direction of the electric valve, the diameter of the opening portion 61 increases from top to bottom, i.e., increases downwards. The opening portion 61 includes a first lower end face 611, which abuts against the upper end face portion 521 and is fixed to the upper end face portion 521 by laser welding. This arrangement reduces the heat transferred to the plastic part 51 when welding the opening portion 61 and the connecting portion 52, helping to alleviate the thermal impact of welding on the injection-molded part. Certainly, the avoidance portion 514 may be further provided. Other structures of this embodiment may refer to the description of the above embodiment.

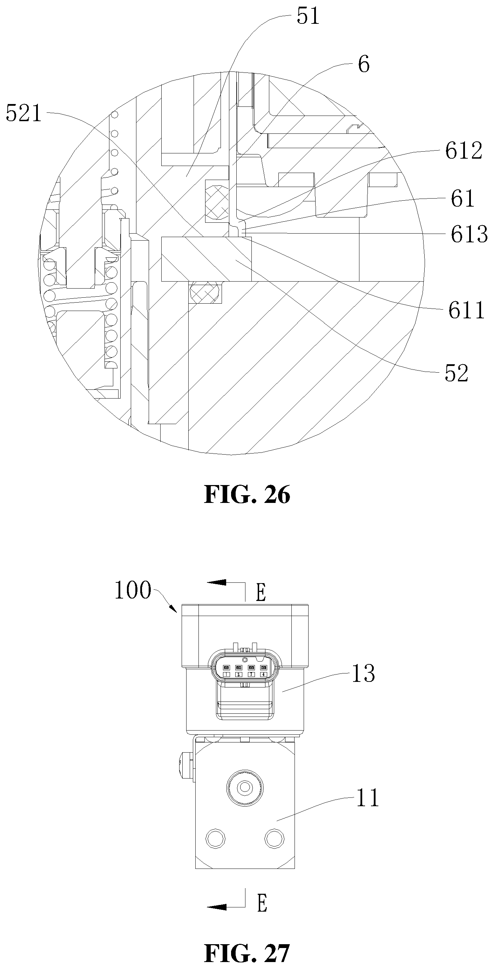

With reference to FIG. 26 in conjunction with FIGS. 23 to 25, a fourth embodiment of the electric valve is schematically illustrated. Compared with the second embodiment of the electric valve, the sleeve 6 also includes the sleeve main body 62. The opening portion 61 and the sleeve main body 62 form an integrated structure, and the opening portion 61 is located below the sleeve main body 62. The sleeve main body 62 has a constant diameter. The outer diameter of the opening portion 61 is larger than the outer diameter of the sleeve main body 62, and the opening portion 61 is parallel to the sleeve main body 62, where the parallel manner herein includes an approximately parallel manner. Specifically, in this embodiment, the opening portion 61 includes a radial extension portion 612 and an axial extension portion 613. The radial extension portion 612 is located between the axial extension portion 613 and the sleeve main body 62. An outer diameter of the axial extension portion 613 is larger than an outer diameter of the radial extension portion 612, and the axial extension portion 613 is parallel to the sleeve main body 62. The opening portion 61 abuts against the connecting portion 52 and is fixed to the connecting portion 52 by laser welding. In this way, the heat transferred to the plastic part 51 during welding of the opening portion 61 of the sleeve 6 can also be reduced, thus mitigating the thermal impact of the welding on the injection-molded part. Certainly, the avoidance portion 514 may be further provided. Other structures of this embodiment may refer to the above embodiment.

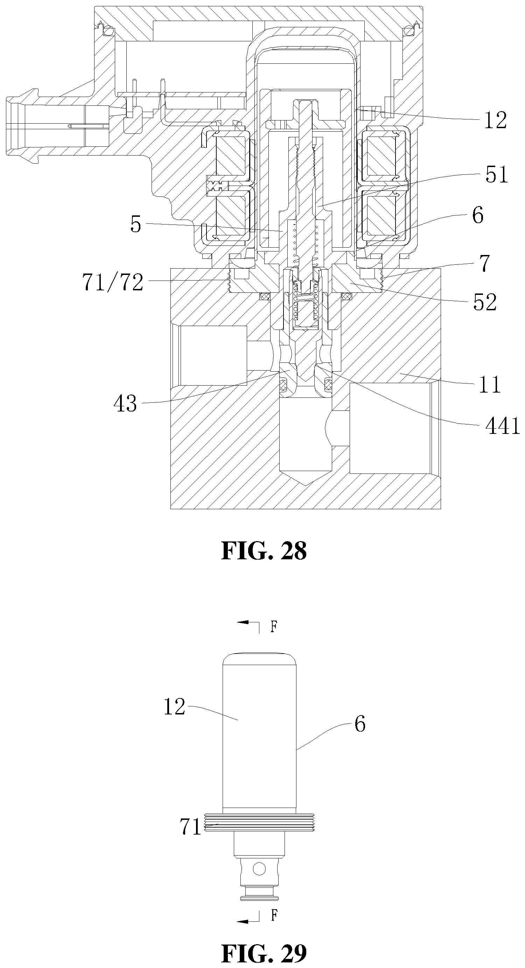

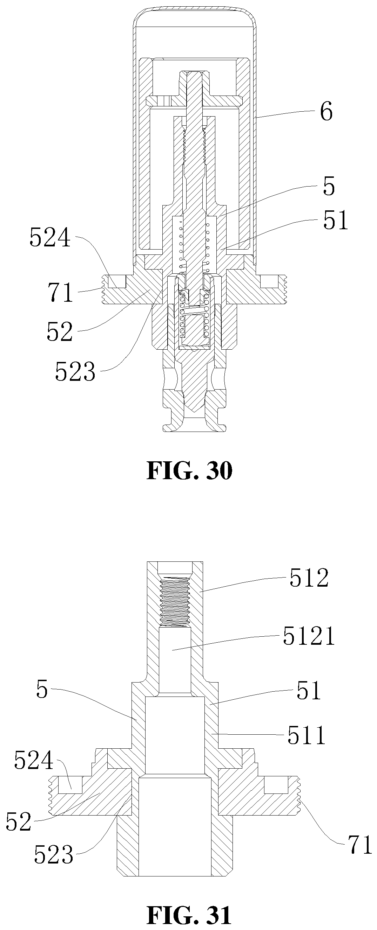

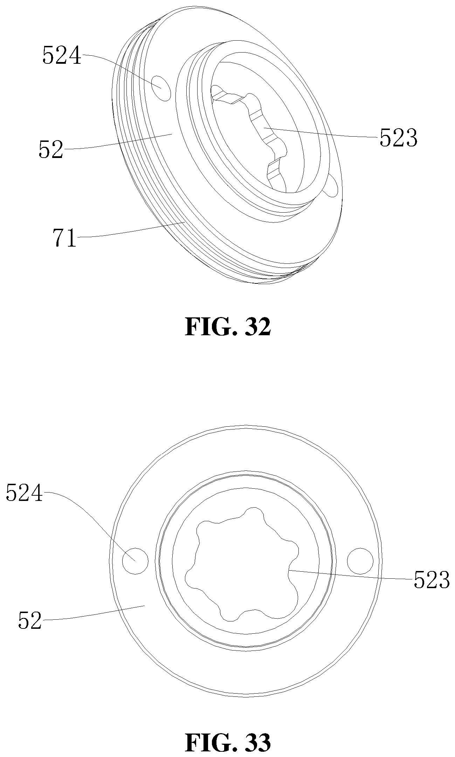

With reference to FIGS. 27 to 33, a fifth embodiment of the electric valve is schematically illustrated. In this embodiment, the electric valve includes a valve component 12 and a valve body 11, and the valve component 12 may be mounted on the valve body 11. The valve component 12 includes a nut assembly 5 and a sleeve 6. The nut assembly 5 includes a plastic part 51 and a connecting portion 52. The connecting portion 52 is fixed to the plastic part 51, the fixation manner of which includes injection molding, interference fit or adhesive bonding, or interference fit combined with adhesive bonding. In this embodiment, the plastic part 51 covers a part of the connecting portion 52, and the sleeve 6 is fixedly connected to the connecting portion 52, where the fixation method includes welding such as laser welding and brazing, adhesive bonding and the like. In this embodiment, the connecting portion 52 is provided with a step structure in cooperation with the sleeve 6. The connection manner between the connecting portion 52 and the sleeve 6 may also refer to the second embodiment to the fourth embodiment of the electric valve. The valve component 12 further has a connecting structure 7, which is formed on the connecting portion 52 or connected to the connecting portion 52, and the valve component 12 is fixedly connected to the valve body 11 through the connecting structure 7. The connecting structure 7 is formed on the connecting portion 52 or connected to the connecting portion 52, and the valve component 12 is fixedly connected to the valve body 11 through the connecting structure 7. Such arrangement is beneficial to simplifying the connections of the components of the electric valve, and simplifying the connection structure of the valve component, thereby further reducing the processing cost. In this embodiment, the valve component 12 as a whole is fixedly connected to the valve body 11 through the connecting portion 52. This arrangement is beneficial to the structure of the electric valve, reduces the number of the parts of the electric valve and simplifies the mounting of the electric valve. A part of the structure of this embodiment may refer to or draw from the above embodiment. For example, the welding of the sleeve 6 and the connecting portion 52 may refer to the second to fourth embodiments of the electric valve. The general structure of each embodiment may also be combined with each other.

With reference to FIGS. 27 to 33, in this embodiment, the plastic part 51 covers an inner side part of the connecting portion 52. The connecting portion 52 is made of a metallic material, such as stainless steel. The plastic part 51 is formed by injection molding with the connecting portion 52 being an injection molding insert. In other words, the nut assembly 5 or a part of the nut assembly 5 is formed by injection molding with the connecting portion 52 being an injection molding insert. The plastic part 51 is formed by injection molding, and the connecting portion 52 has a fixation reinforcing portion 523. The fixation reinforcing portion 523 is located at the inner side part of the connecting portion 52 and is at least partially covered by the plastic part 51. The plastic part 51 may be specifically made of a specialty engineering plastic or a composite material with certain strength, such as mechanically reinforced polyetheretherketone (PEEK) material or modified polyetheretherketone (PEEK) material, or mechanically reinforced polyphenylene sulfide (PPS) material or modified polyphenylene sulfide (PPS) material. In this embodiment, the plastic part 51 is of an integrated structure and is integrally formed by injection molding. In other embodiments, the plastic part 51 may have separately formed structures that are fixedly or limitedly connected to each other to form the plastic part 51. In this embodiment, the connecting portion 52 has the fixation reinforcing portion 523 at a part where the connecting portion 52 is connected to the plastic part 51. The fixation reinforcing portion 523 is located at the inner side part of the connecting portion 52 and is at least partially covered by the plastic part 51. For example, an inner periphery of the connecting portion 52 is of a non-circular structure to serve as the fixed reinforcing structure. For example, a shape of an inner side of a cross-section of an inner side wall of the connecting portion 52 may be square or hexagonal, or an irregular circle with a straight edge, a flower shape or the like. This arrangement enhances the connection strength between the connecting portion 52 and the plastic part 51, and can prevent the connecting portion 52 from rotating circumferentially relative to the plastic part 51, thus improving the connection strength, compared with an arrangement that the side wall of the connecting portion 52 is of a circular structure. In other embodiments, the inner periphery of the connecting portion 52 may be provided with a groove structure, a protrusion structure, a knurl, or other structures, which may achieve similar functions, to serve as the fixed reinforcing structure. It is also possible to create a through hole, a groove, a protrusion, a knurl or other structures in the axial direction to serve as the fixed reinforcing structure, or to be combined with the above-described fixed reinforcing structure that is circumferentially arranged.

In this embodiment, the connecting structure 7 includes a first external thread portion 71, which is located on an outer circumferential wall of the connecting portion 52. The valve body 11 has a valve body cavity 115, and at least a part of the connecting portion 52 is located in the valve body cavity 115. A wall of the valve body cavity 115 has a first internal thread portion 72 corresponding to the first external thread portion 71, and the connecting portion 52 is fixed to the valve body 11 by threaded fit. This arrangement simplifies the mounting of the valve component 12 and the valve body 11, and also simplifies the structure of the valve component 12 and reduces the number of parts. The connecting portion 52 further has a cooperating portion 524. The cooperating portion 524 is a groove formed at the connecting portion 52, and an opening of the groove is located on an upper wall of the connecting portion 52. An external tool cooperates with the cooperating portion 524 to screw and fix the connecting portion 52 to the valve body 11 by threaded fit. The external tool is, for example, a tool with a protrusion portion. The protrusion portion of the tool extends into the groove on the upper side of the connecting portion 52, and the tool drives the connecting portion 52 to rotate to be in threaded fit with the valve body 11, so that the valve component 12 and the valve body 11 are screwed and fixed by threaded fit. This arrangement facilitates the assembly of the valve component 12 and the valve body 11, simplifies the mounting structure, and facilitates the processing and forming of the connecting portion 52. A lower end of the connecting portion 52 abuts against the valve body 11, restricting a lowest position of the connecting portion 52 relative to the valve body 11. In this embodiment, the valve body 11 is further provided with a step structure, and the connecting portion 52 is located in a groove formed by the step structure and abuts against a bottom wall of the step structure.

In another embodiment, the cooperating portion 524 is a cooperating edge 4161 formed on an upper side of the first external thread portion 71. For example, the first external thread portion 71 is provided at a lower side of the outer circumferential wall of the connecting portion 52, and the matching edge 4161 is provided at an upper side of the outer circumferential wall of the connecting portion 52. The matching edge 4161 bears a force for threaded connection. The cooperating edge 4161 can bear a force applied by assembly tools such as wrenches. An outer shape of a cross-section of an external profile thereof may be square, hexagonal, or flower-shaped, or an irregular circle with parallel opposite sides for bearing the force, or the like. In this embodiment, the cooperating edge 4161 is hexagonal in shape, and serves as a force application point for the assembly tools such as wrenches. This arrangement also facilitates the assembly of the valve component 12 and the valve body 11 and simplifies the mounting structure.

In this embodiment, the valve component 12 includes a valve seat portion 43. The valve seat portion 43 has a valve port 441, and the valve seat portion 43 is connected to the nut assembly 5 by threaded fit or interference fit, or by threaded fit in conjunction with adhesive bonding, or by interference fit in conjunction with adhesive bonding, which may specifically refer to the second to fourth embodiments of the electric valve. In other embodiments, the valve body 11 may be fixed to the connecting portion 52 by welding, and the general structures of various embodiments may be used in combination.

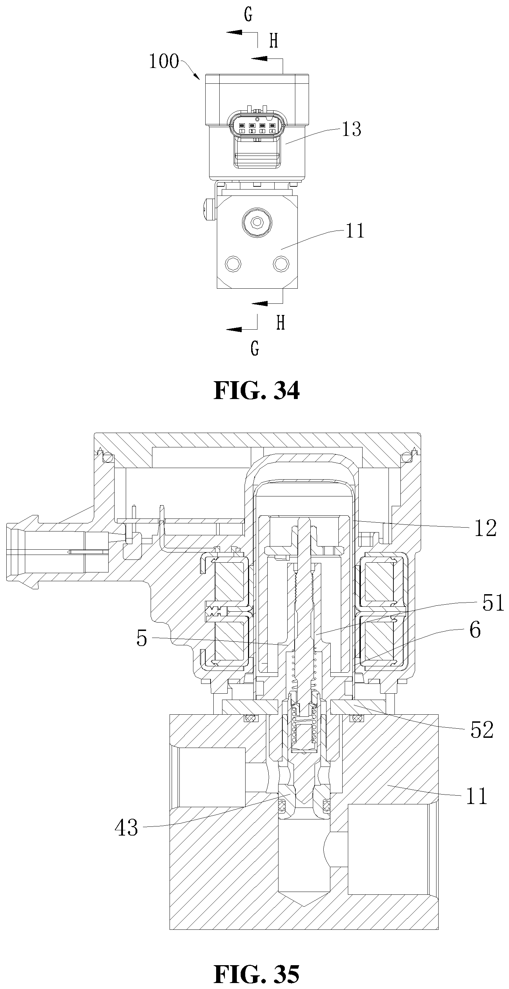

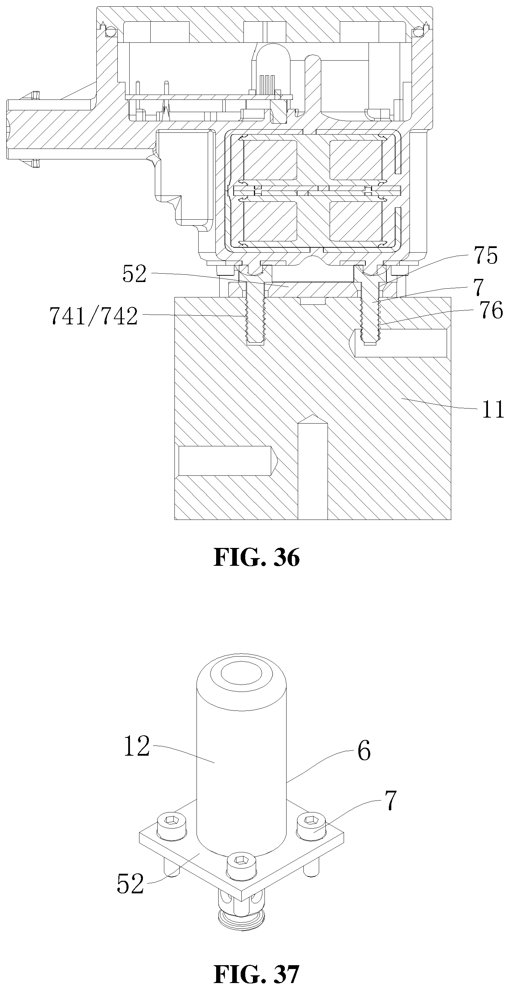

With reference to FIGS. 34 to 38, a sixth embodiment of the electric valve is schematically illustrated. Compared with the fifth embodiment of the electric valve, in this embodiment, the connecting structure 7 is a connector 74, and the connector 74 is basically columnar. The connecting portion 52 has a communication hole 75, which runs through the connecting portion 52 along the axial direction of the electric valve. The connector 74 has an external thread cooperation portion 741, and an upper end of the valve body 11 has a connecting hole 76. The connecting hole 76 is open towards the connecting portion 52, and a wall of the connecting hole 76 has an internal thread cooperation portion 742 in cooperation with the external thread cooperation portion 741. During assembly, the communication hole 75 is coaxial with the connecting hole 76. The connector 74 passes through the communication hole 75 and is screwed into the connecting hole 76 through threaded fit, thereby fixing the connecting portion 52 to the valve body 11. At least a part of the connector 74 is located in the communication hole 75 and at least another part of the connector 74 is located in the connecting hole 76. An upper end of the connector 74 has a flange. An outer diameter of the flange is larger than an outer diameter of the connecting hole 76, and the flange cannot pass through the connecting hole 76. The lower end of the connecting portion 52 abuts against the valve body 11, restricting a lowest position of the connecting portion 52 relative to the valve body 11. Other structures of this embodiment may refer to the above embodiments. The connector 74 includes a structure such as a screw, a bolt or the like. The number of the connector 74 corresponds to the number of the communication hole 75. At least two connectors 74 and at least two communication holes 75 are provided. The communication holes 75 are uniformly distributed on the outer periphery of the connecting portion 52. In this embodiment, all of the numbers of the connectors 74, the communication holes 75 and the connecting holes 76 are four, which is beneficial to improving the reliability of the connection. The connector 74 serves as the connecting structure 7 to fix the connecting portion 52 to the valve body 11, which also facilitates the assembly of the valve component 12 and the valve body 11, thus simplifying the mounting structure. In another embodiment, the connector 74 does not have the external thread cooperation portion 741, and a part of the connector 74 is located in the connecting hole 76 of the valve body 11 and is in interference fit with the connecting hole 76, thereby fixing the valve component 12 to the valve body 11.

In another embodiment of the electric valve, compared with the fifth embodiment of the electric valve, in this embodiment, the connecting structure 7 is a connector 74, which is of an annular shape. The connector 74 has an external thread cooperation portion 741, and the wall of the valve body cavity 115 has an internal thread cooperation portion 742 in cooperation with the external thread cooperation portion 741. The valve body 11 has a first step portion 77, and a lower end portion of the connecting portion 52 abuts against the first step portion 77. The connector 74 is fixed to the valve body 11 by threaded fit, and a lower end portion of the connector 74 abuts against the upper end portion of the connecting portion 52, so that the connecting portion 52 is pressed and limited between the connecting portion 52 and the valve body 11, thereby limiting the valve seat portion 43 at the valve body 11. This arrangement also facilitates the assembly of the valve component 12 and the valve body 11, simplifies the mounting structure, and reduces the number of the parts. In yet another embodiment, the connector 74 does not have the external thread cooperating portion 741, and the connector 74 is annular in shape. An outer side of the connector 74 is in interference fit with the valve body 11, and an inner side of the connector 74 is in interference fit with the connecting portion 52, thus limiting the connector 52 at the valve body 11.

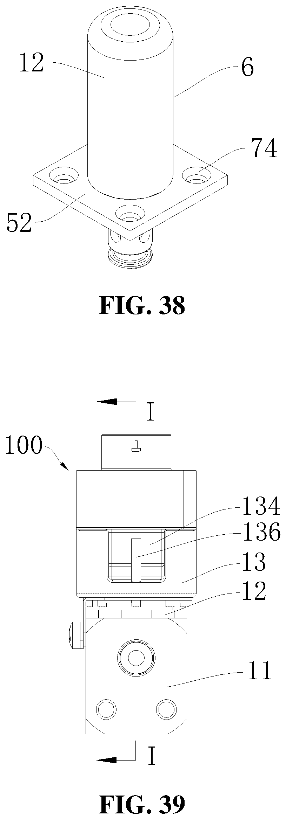

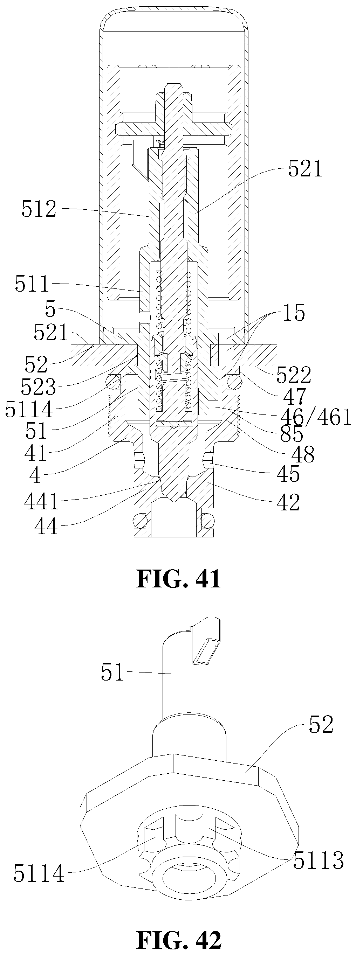

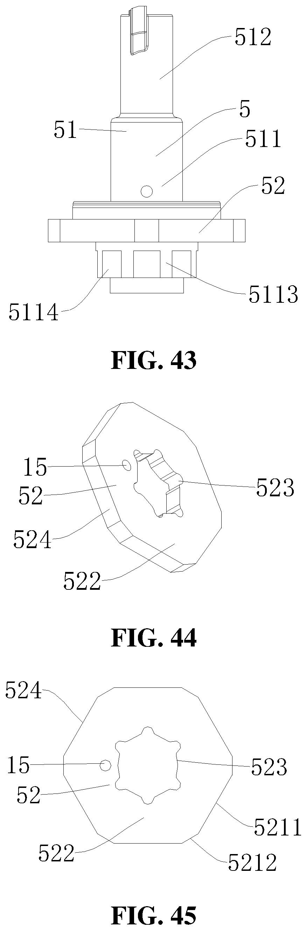

With reference to FIGS. 39 to 45, a seventh embodiment of the electric valve is schematically illustrated. In this embodiment, the electric valve includes a nut assembly 5, a valve seat assembly 4, a valve core assembly 122 and a sleeve 6. The nut assembly 5 includes a plastic part 51 and a connecting portion 52. The connecting portion 52 is fixed to the plastic part 51, the fixation manner of which includes injection molding, interference fit or adhesive bonding, or interference fit combined with adhesive bonding. In this embodiment, the nut assembly 5 or a part of the nut assembly 5 is formed by injection molding with the connecting portion 52 being an injection insert. The plastic part 51 covers a part of the connecting portion 52. For example, in this embodiment, the plastic part 51 covers an inner side part of the connecting portion 52. The plastic part 51 covers a part of the connecting portion 52. For example, in this embodiment, the plastic part 51 covers an inner side part of the connecting portion 52. In this embodiment, the connecting portion 52 is made of a metallic material, at least a part of the structure of the valve seat assembly 4 is made of a metallic material, and the sleeve 6 is made of a metallic material, such as stainless steel. The sleeve 6 is fixedly connected to the connecting portion 52, the fixation manner of which includes welding. The plastic part 51 may specifically be made of a specialty engineering plastic or a composite material with certain strength, such as mechanically reinforced polyetheretherketone (PEEK) material or modified polyetheretherketone (PEEK) material, or mechanically reinforced polyphenylene sulfide (PPS) material or modified polyphenylene sulfide (PPS) material. In this embodiment, the plastic part 51 is of an integrated structure and is integrally formed by injection molding. In other embodiments, the plastic part 51 may have separately formed structures that are fixedly or limitedly connected to each other to form the plastic part 51. In this embodiment, the connecting portion 52 has a fixation reinforcing portion 523 at a part where the connecting portion 52 is connected to the plastic part 51. The fixation reinforcing portion 523 is located at the inner side part of the connecting portion 52 and is at least partially covered by the plastic part 51. For example, an inner periphery of the connecting portion 52 is of a non-circular structure. For example, a shape of an inner side of a cross-section of an inner side wall of the connecting portion 52 may be square or hexagonal, or an irregular circle with a straight edge, a flower shape or the like. This arrangement enhances the connection strength between the connecting portion 52 and the plastic part 51, and can prevent the connecting portion 52 from rotating circumferentially relative to the plastic part 51 compared with an arrangement that the side wall of the connecting portion 52 has a circular structure. In other embodiments, the inner periphery of the connecting portion 52 may be provided with a groove structure, a protrusion structure, a knurl structure, or other structures that may achieve similar functions. It is also possible to create a through hole, a groove, a protrusion or other structures in an axial direction. Or, a combination of the aforementioned structures may be provided.

With reference to FIGS. 39 to 45, in this embodiment, the valve seat assembly 4 includes a valve port portion 44 being provided with a valve port 441. The electric valve further includes the valve core assembly 122, which can cooperate with the valve port 441 to regulate an opening degree of the valve port 441. The connecting portion 52 includes a lower end face portion 522, which is located on a lower wall of the connecting portion 52. The lower end face portion 522 includes a flat surface. For example, the lower end face portion 522 is completely flat or mostly flat, and at least a part of the lower end face portion 522 connected to the valve seat assembly 4 is flat. In the present application, a certain degree of roughness of the flat surface may be allowed. The valve seat assembly 4 includes a first end portion 47 which is made of a metallic material. The first end portion 47 abuts against the lower end face portion 522 and is connected to the lower end face portion 522 by welding. The sleeve 6 is fixedly connected to the connecting portion 52, and the first end portion 47 of the valve seat assembly 4 is fixed to the lower end face portion 522 by welding. No additional cooperating structure is needed at a position where the valve seat assembly 4 and the connecting portion 52 cooperates with each other, which is beneficial to reducing the processing cost of the valve seat assembly. This arrangement helps to simplify the structure of each part and reduce the processing cost. In this embodiment, the lower end face portion 522 is located on the lower wall of the connecting portion 52, and at least a part of the lower end face portion 522 lies on an outer side of the first end portion 47 along the radial direction of the electric valve. The lower end face portion 522 is fixed to the connecting portion 52 by laser welding. The lower end portion of the connecting portion 52 is a flat surface to simplify the processing of the connecting portion 52 and reduce the processing cost. Referring to the second embodiment of the electric valve, this embodiment may be combined with the second embodiment. The entire upper end face portion 521 and the entire lower end face portion 522 of the connecting portion 52 may be flat, and this arrangement facilitates the processing of the connecting portion 52. For example, the connecting portion 52 may be formed by stamping, swaging, warm heading or other means, which reduces or eliminates the processing steps of the connecting portion 52, and also reduces a height of the connecting portion 52, thereby reducing the overall height of the electric valve.

With reference to FIGS. 39 to 45, in this embodiment, the valve seat assembly 4 includes a first valve seat portion 41, which includes a first main body 48 and the aforementioned first end portion 47. The first main body 48 and the first end portion 47 form a one-piece structure. The first end portion 47 is located above the first main body 48, and abuts against the lower end face portion 522 and is fixed to the lower end face portion 522 by laser welding. In the radial direction of the electric valve, a distance between an outer edge of the first end portion 47 and an outer edge of the lower end face portion 522 is greater than or equal to 0.4 mm. The first end portion 47 is fixed to the connecting portion 52 by laser welding. In this embodiment, the first end portion 47 and the first main body 48 have same inner and outer diameters. The first end portion 47 is arranged perpendicular to the lower end face portion 522, which includes an arrangement that the first end portion 47 is approximately perpendicular to the lower end face portion 522. The connection therebetween is achieved by laser welding. In this embodiment, a sealing surface is formed by a welding surface. A part of the structure of this embodiment may refer to or draw from the above embodiment, and general structures of each embodiment may be used in combination.

With reference to FIGS. 39 to 45, in this embodiment, the lower end face portion 522 is flat. The distance between the outer edge of the first end portion 47 and the outer edge of the lower end face portion 522 is greater than or equal to 0.4 mm along the radial direction of the electric valve, and the first end portion 47 is connected to the connecting portion 52 by laser welding. This arrangement achieves a better welding penetration and improves the welding quality at the welding joint. For a better welding effect, the distance between the outer edge of the first end portion 47 and the outer edge of the lower end face portion 522 is greater than or equal to 0.5 mm. In this embodiment, a gap between the sleeve 6 and the connecting portion 52 is sealed by the welding surface.

With reference to FIGS. 39 to 45, in another embodiment, the lower end face portion 522 is flat. The outer edge of the lower end face portion 522 includes a first edge 5211 and a second edge 5212, and an outer diameter of the second edge 5212 is larger than an outer diameter of the first edge 5211. In this embodiment, the first edge 5211 is located at a point where the outer edge of the lower end face portion 522 has the smallest outer diameter, while the second edge 5212 is located at a point where the outer edge of the lower end face portion 522 has the largest outer diameter. The outer edge of the first end portion 47 is within the first edge 5211, and a distance between at least a part of the outer edge of the first end portion 47 and the second edge 5212 is greater than or equal to 0.4 mm. The first end portion 47 is connected to the connecting portion 52 by laser welding. The outer edge of the connecting portion 52 may not be a regular circle, that is, the lower end face portion 522 may not be a regular circle. For example, it may be hexagonal or approximately hexagonal in shape. Or, restricted by the radial dimension of the connecting portion 52, it is allowed that a part of the outer edge of the first end portion 47 is flush or nearly flush with the outer edge of the connecting portion 52, but not beyond the outer edge of the connecting portion 52. Specifically, the outer edge of the first end portion 47 is within the first edge 5211, and the distance between at least a part of the outer edge of the first end portion 47 and the second edge 5212 is greater than or equal to 0.4 mm. For example, in the above-mentioned embodiment, the connecting portion 52 has a cooperating portion 524, which is located at an outer periphery of the connecting portion 52. The cooperating portion 524 is approximately hexagonal in shape, i.e., the outer edge of the connecting portion 52 is also roughly hexagonal in shape. In this case, it is allowed that a part of the outer edge of the first end portion 47 is flush or nearly flush with the outer edge of the connecting portion 52 at a point where the connecting portion 52 has the smallest diameter, but not beyond the outer edge of the connecting portion 52. In this embodiment, the gap between the sleeve 6 and the connecting portion 52 is sealed by the welding surface. In an embodiment with good effects, the distance between the outer edge of the first end portion 47 and the first edge 5211 is greater than or equal to 0.4 mm.

With reference to FIGS. 39 to 45, in this embodiment, the plastic part 51 of the nut assembly 5 includes a main body portion 511 and a nut portion 512. The main body portion 511 includes a valve seat positioning portion 5113, and the valve seat assembly 4 includes an accommodating portion 46 being provided with an accommodating cavity 461. The valve seat positioning portion 5113 is located in the accommodating cavity 461, and abuts against an inner circumferential wall of the first valve seat portion 41. The valve seat positioning portion 5113 restricts a radial position of the first valve seat portion 41, thereby limiting the radial position of the positioning portion relative to the connecting portion 52. In this embodiment, the valve seat positioning portion 5113 has multiple recessed portions 5114, which can help to reduce a weight of the plastic part 51. Certainly, referring to the second embodiment of the electric valve, the plastic part 51 may be provided with an avoidance portion 514, or the diameter of the first end portion 47 may relatively expand outwards, which can help to reduce the heat transferred to the plastic part 51 during welding and alleviate the thermal impact of welding on the injection-molded part. In this embodiment, the interference fit between the first valve seat portion 41 and the valve seat positioning portion 5113 is beneficial to improving the positioning precision, thereby further improving the coaxiality of the electric valve. Alternatively, in other embodiments, the valve seat assembly 4 may be positioned using external tools.

With reference to FIGS. 39 to 45, in this embodiment, the valve seat assembly 4 further includes a second valve seat portion 42, which is farther away from the connecting portion 52 than the first valve seat portion 41 along the axial direction of the electric valve. The valve port portion 44 is located at the second valve seat portion 42, and the first valve seat portion 41 and the second valve seat portion 42 are of an integrated structure. The valve seat assembly 4 is integrally formed by warm heading. Or, a main body portion of the valve seat assembly 4 is formed by warm stamping performed on the valve seat assembly 4, and a side hole 45, a groove or the valve port 441 are formed by machining. This arrangement facilitates the formation of the valve seat assembly 4, and can reduce the processing consumables and the cost compared with an arrangement that the valve seat assembly 4 is completely formed by machining. In a variation of this embodiment, the valve seat assembly 4 is formed by metal drawing. Or, a main body portion of the valve seat assembly 4 is formed by metal drawing performed on the valve seat assembly 4, and the side hole 45, the groove or the valve port 441 are formed by machining. This arrangement also facilitates the formation of the valve seat assembly, and can reduce the processing materials and the cost compared with machining. The metal drawing process includes drawing, stamping and other processes.

With reference to FIGS. 39 to 45, in this embodiment, the electric valve further includes a valve body 11, which has a valve body cavity 115. At least a part of the valve seat assembly 4 is located in the valve body cavity 115. The first valve seat portion 41 has a first external thread 85. A wall of the valve body cavity 115 has a first internal thread 86 in cooperation with the first external thread 85, and the valve seat assembly 4 is fixed to the valve body 11 by threaded fit. Alternatively, the connection manner between the valve seat assembly 4 or the nut assembly 5 and the valve body 11 may refer to the above-mentioned embodiments. For example, the outer periphery of the connecting portion 52 may be provided with the first external thread 85, the valve body 11 may be provided with the first internal thread 86, and the connecting portion 52 and the valve body 11 may be fixed to each other by threaded connection.

With reference to FIGS. 39 to 45, in this embodiment, the electric valve has a balance passage 15, which includes a groove formed on the valve seat positioning portion 5113 or the first valve seat portion 41, a through hole passing through the connecting portion 52 in the axial direction, and another through hole passing through the plastic part 51 in the axial direction. The balance passage 15 is in communication with cavities of the valve seat assembly 4 and the sleeve 6. A balance hole 14 may be formed by injection molding or subsequent processing.

In this embodiment, the valve seat assembly 4 further has a side hole 45 located above the valve port portion 44. The electric valve further includes a first sealing component and a second sealing component. The first sealing component is located between the connecting portion 52 and the valve body 11 or between the first valve seat portion 41 and the valve body 11, and the second sealing component is located between the second valve seat portion 42 and the valve body 11. The connecting portion 52 is connected to the valve body 11. The functions of the first sealing component and the second sealing component may refer to the above embodiments. When the first sealing component and the second sealing component are both located on the valve seat assembly, the valve component can be conveniently connected to the valve body as a whole.

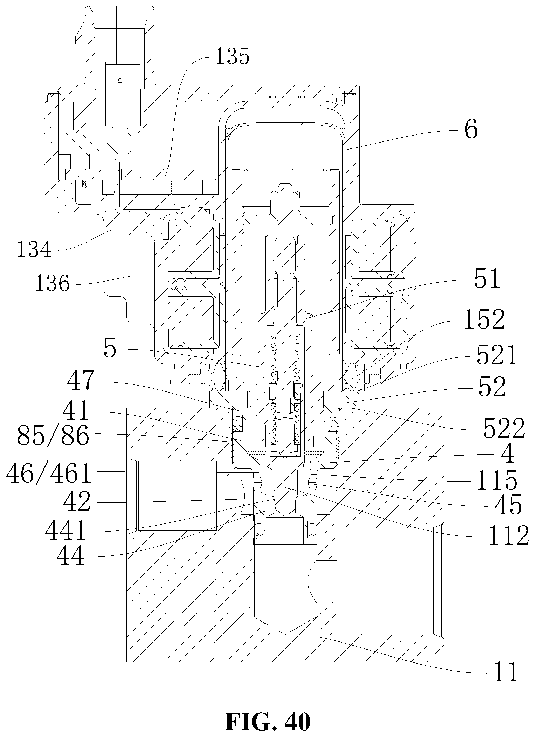

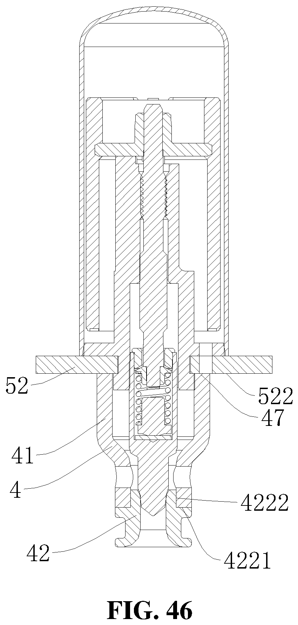

With reference to FIG. 46 in conjunction with FIG. 40, in another variation of the seventh embodiment of the electric valve, the first valve seat portion 41 and the second valve seat portion 42 are separate structures, which are separately formed and fixedly connected or limitedly connected to each other. The first valve seat portion 41 is integrally formed by warm heading, or by metal drawing, or by warm stamping combined with machining, or by metal drawing combined with machining. The second valve seat portion 42 is fixed to the first valve seat portion 41 by welding, adhesive bonding or interference fit, or by interference fit combined with adhesive bonding. This arrangement facilitates the formation of a part of the valve seat assembly 4, and can reduce the processing consumables and the cost compared to machining only. In this embodiment, the second valve seat portion 42 has a step 422, which includes a bottom step surface 4221 and a side step surface 4222. A bottom end of the first valve seat portion 41 abuts against the bottom step surface 4221, and an inner circumferential wall of the first valve seat portion 41 abuts against the side step surface 4222 to limit a radial position of the first valve seat portion 41 relative to the second valve seat portion 42. The second valve seat portion 42 is made of a metallic material. Or, a main body part of the second valve seat portion 42 is made of resin, and the valve port is made of a metallic material.

In this embodiment, the electric valve further includes a second seal 152. A lower end portion of the second seal 152 abuts against the connecting portion 52, and the second seal 152 is pressed between an injection-molded body 132 and the sleeve 6. The second seal 152 may prevent external moisture or harmful substances from entering a gap between the sleeve 6 and the coil assembly 13 to cause corrosion of the coil assembly 13 or other components, thereby enhancing the lifespan and reliability of the electric valve.

In this embodiment, the coil assembly 13 includes a thick block 134, and the thick block 134 covers a pin terminal (not shown in the drawings) of the coil assembly. One end of the pin terminal is connected to a lead of a coil winding of the coil assembly 13, and the other end of the pin terminal is connected to an electric control board 135. The coil assembly further includes a slot 136 located on the thick block 134. In this embodiment, the slot 136 is of an elongated shape viewed in the radial direction and is substantially vertical, and the slot 136 is recessed inwards from an outer peripheral surface of the thick block 134. Alternatively, in other embodiments, the slot 136 may be of other shapes on the basis of achieving the same function.

Other structures of this embodiment may refer to the above embodiments. Structures that are derived from these embodiments and can be used in combination are within the protection scope of the present application.

It should be noted that the above embodiments are merely used to illustrate the present application and are not intended to limit the technical solutions described in the present application. Although the present application has been described in detail in this specification with reference to the above embodiments, those of ordinary skill in the art should understand that, modifications or equivalent substitutions may be made to the present application by those skilled in the art, and all technical solutions and improvements thereof that do not depart from the spirit and scope of the present application should fall within the scope of the claims of the present application.

## Claims

1. An electric valve, comprising:
a nut assembly (5);
a valve seat assembly (4); and
a sleeve (6), wherein
the nut assembly (5) comprises a plastic part (51) and a connecting portion (52) that are fixed to each other, the connecting portion (52) is made of a metallic material, and the sleeve (6) is fixedly connected to the connecting portion (52); and
the connecting portion (52) comprises a lower end face portion (522), the valve seat assembly (4) comprises a first end portion (47) that is made of a metallic material, and the first end portion (47) is fixed to the lower end face portion (522) by welding.

2. The electric valve according to claim 1, wherein the lower end face portion (522) is located on a lower wall of the connecting portion (52), at least a part of the lower end face portion (522) is located on an outer side of the first end portion (47) along a radial direction of the electric valve, and the lower end face portion (522) is fixed to the connecting portion (52) by laser welding.

3. The electric valve according to claim 2, wherein the lower end face portion (522) is flat, a distance between an outer edge of the first end portion (47) and an outer edge of the lower end face portion (522) is greater than or equal to 0.4 mm along the radial direction of the electric valve, and the first end portion (47) is connected to the connecting portion (52) by laser welding.

4. The electric valve according to claim 2, wherein
the lower end face portion (522) is flat, an outer edge of the lower end face portion (522) comprises a first edge (5211) and a second edge (5212), and an outer diameter of the second edge (5212) is larger than an outer diameter of the first edge (5211); and
an outer edge of the first end portion (47) is within the first edge (5211), a distance between at least a part of the outer edge of the first end portion (47) and the second edge (5212) is greater than or equal to 0.4 mm, and the first end portion (47) is connected to the connecting portion (52) by laser welding.

5. The electric valve according to any one of claims 2 to 4, wherein the nut assembly (5) comprises a valve seat positioning portion (5113), the valve seat assembly (4) comprises an accommodating portion (46) that is provided with an accommodating cavity (461), the valve seat positioning portion (5113) is located in the accommodating cavity (461), and the valve seat positioning portion (5113) abuts against a wall of the accommodating portion (46).

6. The electric valve according to claim 5, wherein
the valve seat assembly (4) further comprises a second valve seat portion (42), and the second valve seat portion (42) is farther away from the connecting portion (52) than a first valve seat portion (41) along an axial direction of the electric valve;
a valve port portion (44) is located at the second valve seat portion (42), and the first valve seat portion (41) and the second valve seat portion (42) form an integrated structure; and
the valve seat assembly (4) is integrally formed by warm heading, or the valve seat assembly (4) is formed by metal drawing, or the valve seat assembly (4) is formed by warm heading combined with machining, or the valve seat assembly (4) is formed by metal drawing combined with machining.

7. The electric valve according to claim 5, wherein
the valve seat assembly (4) further comprises a second valve seat portion (42), and the second valve seat portion (42) is farther away from the connecting portion (52) than a first valve seat portion (41) along an axial direction of the electric valve;
the second valve seat portion (42) is provided with a valve port portion (44), and the valve port portion (44) is provided with a valve port (441); and
the first valve seat portion (41) and the second valve seat portion (42) are separate structures, and the first valve seat portion (41) is fixedly or limitedly connected to the second valve seat portion (42).

8. The electric valve according to claim 7, wherein
the first valve seat portion (41) is integrally formed by warm heading, or the first valve seat portion (41) is formed by metal drawing, or the first valve seat portion (41) is formed by warm heading combined with machining, or the first valve seat portion (41) is formed by metal drawing combined with machining; and
the second valve seat portion (42) is fixed to the first valve seat portion (41) by welding, adhesive bonding or interference fit, or by interference fit combined with adhesive bonding.

9. The electric valve according to any one of claims 6 to 8, wherein
the electric valve further comprises a valve body (11), the valve body (11) is provided with a valve body cavity (115), and at least a part of the valve seat assembly (4) is located in the valve body cavity (115); and
the first valve seat portion (41) is provided with a first external thread (85), a wall of the valve body cavity (115) is provided with a first internal thread (86) in cooperation with the first external thread (85), the valve seat assembly (4) is fixed to the valve body (11) by threaded fit, and the lower end face portion (522) of the connecting portion (52) abuts against the valve body (11).

10. The electric valve according to claim 9, wherein
the valve seat assembly (4) is further provided with a side hole (45) that is located above the valve port portion (44), and the electric valve further comprises a first sealing component and a second sealing component; and
the first sealing component is located between the connecting portion (52) and the valve body (11) or between the first valve seat portion (41) and the valve body (11), and the second sealing component is located between the second valve seat portion (42) and the valve body (11).

11. The electric valve according to claim 10, wherein the electric valve is provided with a balance passage (15), the balance passage (15) comprises a groove formed on the valve seat positioning portion (5113) or the first valve seat portion (41), a through hole passing through the connecting portion (52) in the axial direction, and another through hole passing through the plastic part (51) in the axial direction, and the balance passage (15) is in communication with a cavity of the valve seat assembly (4) and a cavity of the sleeve (6).

12. The electric valve according to claim 10 or 11, further comprising a coil assembly (13), wherein the coil assembly (13) comprises a stator assembly (131) and an injection-molded body (132), the electric valve further comprises a second seal (152), a lower end portion of the second seal (152) abuts against the connecting portion (52), and the second seal (152) is pressed between the injection-molded body (132) and the sleeve (6).

13. The electric valve according to any one of claims 1 to 4, wherein the sleeve (6) comprises an opening portion (61), the connecting portion (52) comprises an upper end face portion (521), the opening portion (61) is fixed to the upper end face portion (521) by welding, and at least a part of the upper end face portion (521) is located on an outer side of the opening portion (61) in a radial direction of the electric valve.

14. The electric valve according to claim 13, wherein
the upper end face portion (521) is located on an upper surface of the connecting portion (52), and the upper end face portion (521) is flat; and
a distance between an outer edge of the opening portion (61) and an outer edge of the upper end face portion (521) is greater than or equal to 0.4 mm in the radial direction of the electric valve, and the opening portion (61) is connected to the connecting portion (52) by laser welding.

15. The electric valve according to claim 13, wherein
the upper end face portion (521) is located on an upper surface of the connecting portion (52), and the upper end face portion (521) is flat;
an outer edge of the upper end face portion (521) comprises a first edge (5211) and a second edge (5212), an outer diameter of the second edge (5212) is larger than an outer diameter of the first edge (5211), and an outer edge of the opening portion (61) is within the first edge (5211); and
a distance between at least a part of the outer edge of the opening portion (61) and the second edge (5212) is greater than or equal to 0.4 mm, and the opening portion (61) is connected to the connecting portion (52) by laser welding.
